# EUROPÄISCHE PATENTANMELDUNG

(11) **EP 0 895 800 A1**
(43) Veröffentlichungstag der Anmeldung: **10.02.1999**
(21) Anmeldenummer: 98114448.8
(22) Anmeldetag: 01.08.1998
(51) Int. Cl.: B01D 53/18, C23G 1/36

(54) **Absorptionskolonne**

(30) Priorität: 08.08.1997 AT 1333/97
(71) Anmelder: Andritz-Patentverwaltungs-Gesellschaft m.b.H., 8045 Graz (AT)
(72) Erfinder: Lebl, Albert, Dipl.Ing.Dr., 1170 Wien (AT)
(74) Vertreter: Schweinzer, Friedrich

(57) **Zusammenfassung**

Die Erfindung betrifft eine Absorptionskolonne 27 für die Absorption von Säuredämpfen bzw. gasförmigen sauren Verbindungen. Sie ist vornehmlich dadurch gekennzeichnet, daß in die Absorptionskolonne 28 eine Waschkolonne 30 integriert ist.

## Beschreibung

Die Erfindung betrifft eine Absorptionskolonne für die Absorption Von Säuredämpfen bzw. gasförmigen sauren Verbindungen.

Bei den bekannten Säureregenerationsverfahren werden die bei der hydropyrolytischen Säurezersetzung anfallenden Säuredämpfe in eine Füllkörperkolonne geleitet. Die im Gegenstrom aufgegebene Absorptionsflüssigkeit wäscht dabei die Säuren aus, wird am Kolonnenboden als regenerierte Säure entnommen und wieder einer erneuten Verwendung zugeführt. Die so gereinigten Abgase werden dann wieder außen vom Kolonnenkopf zum am Boden stehenden, mit Wasser beaufschlagten, Abgasventilator gesaugt und von dort durch die nachgeschaltete zweite Abgasreinigung mittels Naßwäschers über einen Kamin ins Freie geführt. Die Reinigungswässer von Ventilator und Wäscher werden in einem Spülwasserbehälter gesammelt und als Teil der Absorptionsflüssigkeit auf die Kolonne aufgegeben. Dies erfordert eine Anzahl von Apparaten mit den damit verbundenen Platzbedarf und Kosten.

Ziel der Erfindung ist es daher, den Apparateaufwand und die Kosten einer derartigen Anlage zu reduzieren.

Dies erfolgt erfindungsgemäß dadurch, daß in die Absorptionskolonne eine Waschkolonne integriert ist. Dies ermöglicht eine kompakte Bauweise und dadurch einen reduzierten Platz-/Raumbedarf bei gleichzeitig reduzierten Kosten durch preisgünstigere Fertigung und geringere Montagezeit.

Eine vorteilhafte Weiterbildung der Erfindung ist dadurch gekennzeichnet, daß Absorptions- und Waschteil ineinander angeordnet sind. Durch diese Ausführung läßt sich eine besonders kompakte Einheit bauen.

Eine günstige Ausgestaltung der Erfindung ist dadurch gekennzeichnet, daß die Teile konzentrisch ineinander angeordnet sind. Bei einer derartigen Anordnung erfolgt die Strömung von Gas und Flüssigkeit besonders gleichmäßig.

Eine besonders günstige Weiterbildung der Erfindung ist dadurch gekennzeichnet, daß der äußere Teil als Absorptionsteil und der innere Teil als Waschteil ausgebildet ist. Dadurch ergibt sich eine kompakte Bauweise, weniger Platzbedarf, und eine Reduzierung der Montagezeit.

Eine vorteilhafte Ausgestaltung der Erfindung ist dadurch gekennzeichnet, daß der Vorlagetank für die Umwälzung in der Waschkolonne und für die Aufgabe der Absorptionsflüssigkeit unmittelbar unterhalb der Kolonne angeordnet ist. Dadurch kann die gesamte Regenerationsanlage noch kompakter ausgeführt werden.

Eine erfindungsgemäße Weiterbildung ist dadurch gekennzeichnet, daß die Aufgabeleitung für die Absorptionsflüssigkeit und die Leitung für die Spülwasserumwälzung mit derselben Pumpe verbunden sind. Durch diese Ausführung kann ein weiteres Aggregat eingespart und somit die Kosten weiter reduziert werden.

Eine vorteilhafte Ausgestaltung der Erfindung ist dadurch gekennzeichnet, daß unmittelbar oberhalb der Kolonne ein Verdampfer angeordnet ist. Mit dieser Anordnung wird der Raumbedarf noch weiter reduziert.

Die Erfindung wird nun anhand der Zeichnungen beispielhaft beschrieben, wobei Fig. 1 eine Regenerationsanlage nach dem Stand der Technik, Fig. 2 eine erste Variante der Erfindung, Fig. 3 eine weitere Variante der Erfindung und Fig. 4 eine erfindungsgemäße Kolonne darstellt.

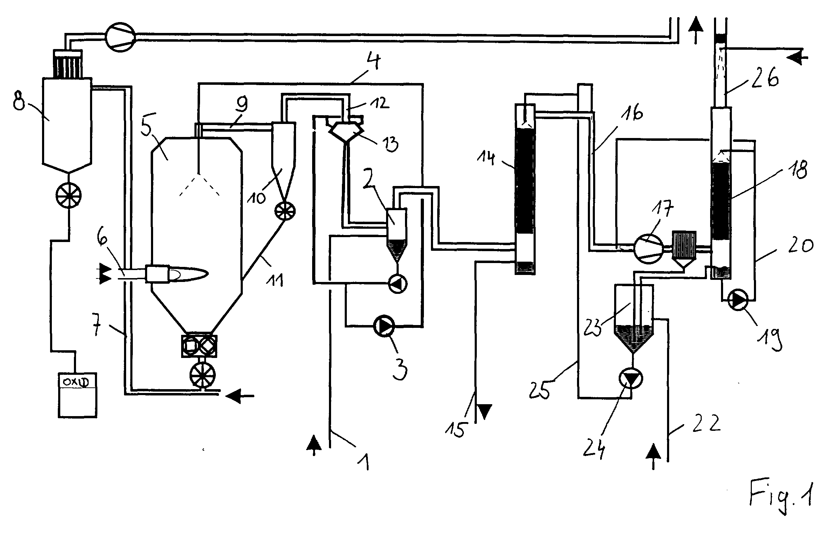

Fig. 1 stellt nun eine HCl-Regenerationsanlage dar. Abbeize wird über eine Leitung 1 einem Tropfenabscheider 2 aufgegeben, wovon diese durch eine Pumpe 3 über eine Leitung 4 einem Reaktor 5 aufgegeben wird. Dieser Reaktor 5 kann ein Sprühröstreaktor sein, der mit einem Luft-/Gasgemisch beheizt wird. Das Röstprodukt, z.B. Eisenoxid wird über eine Leitung 7 in einen Bunker 8 gefördert. Das Abgas gelangt zu einem Zyklon 9, in dem restliche Oxidteilchen abgeschieden und über eine Leitung 11 in den Reaktor 5 zurückgeführt werden. Das Gas gelangt weiter über Leitung 12 in einen Venturiwäscher 13 in den Tropfenabscheider 2 und weiter in die Absorptionskolonne 14. Aus dieser Absorptionskolonne 14 wird dann über Leitung 15 das Regenerat abgezogen und wieder dem Beizprozeß zugeführt. Das teilgereinigte Gas gelangt über Leitung 16 und einen Abgasventilator 17 in den Abgaswäscher 18. Hier wird über Leitung 22 und den Spülwasserbehälter 23 Spülwasser im unteren Teil des Abgaswäschers 18 zugeführt. Der Sumpf wird mittels einer Pumpe 19 und einer Leitung 20 im Kopfbereich des Wäschers aufgegeben. Ein Teilstrom kann auch vor dem Abgasventilator 17 in Leitung 16 eingedüst werden. Ein Teilstrom des Spülwassers aus dem Spühlwasserbehälter 23 wird mittels Pumpe 24 über eine Leitung 25 der Absorptionskolonne 14 aufgegeben. Das gereinigte Abgas verläßt die Anlage über den Abgaskamin 26.

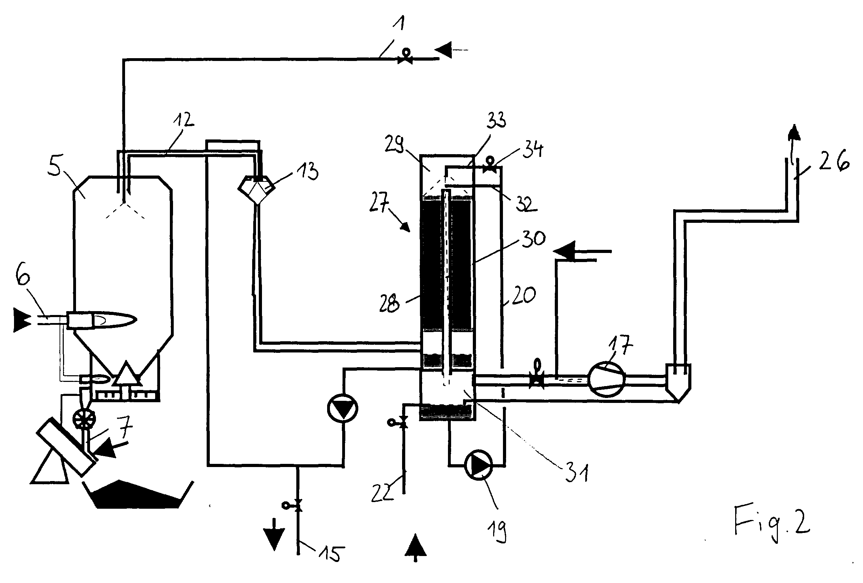

Fig. 2 stellt nun eine Anlage mit der erfindungsgemäßen Absorptionskolonne 27 dar. Das vom Venturiwäscher 13 kommende Abgas des Sprühröstreaktors 5 wird in den unteren Teil der Kolonne 27 in den äußeren, der Absorption dienenden Bereich 28 geleitet. Es strömt durch die Füllkörper nach oben und wird im Kopfbereich 29 der Kolonne 27 umgelenkt und durch das zentrale Strahlwäscherrohr 30 nach unten in den Bereich des am unteren Ende der Kolonne 27 angeordneten Spülwasserbehälters 31 geleitet. Das gereinigte Gas wird wiederum durch einen Abgasventilator 17 über einen Kamin 26 an die Umgebung abgeführt. Das Spülwasser aus dem Spülwasserbehälter 31 wird durch die Pumpe 19 und Leitung 20 in den Kopfbereich 29 der Kolonne 27 geführt. Über die Leitung 32 gelangt der Hauptstrom des Spülwassers in den Wäscherteil 30. Ein Teilstrom wird über die Leitung 33 und das Regelventil 34 dem Absorptionsteil 28 zugeführt.

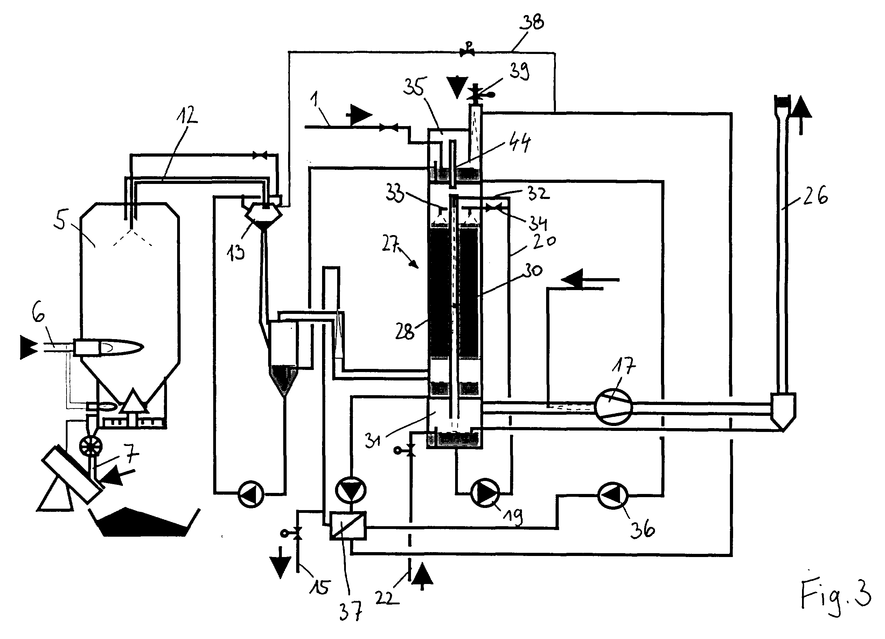

Fig. 3 zeigt nun eine weitere Variante der Erfindung. Es werden hier wieder für gleiche Teile die gleichen Bezugszeichen verwendet. Im Unterschied zur Variante der Fig. 2 wird hier die Abbeize 1 erst einem Verdampfer 35 zugeführt, der unmittelbar oberhalb der Kolonne 27 angeordnet ist. Mittels einer Pumpe 36 wird die Abbeize einem Wärmetauscher 37 zugeführt und vom heißen Regenerat 15 aufgewärmt und eventuell teilweise verdampft. Ein Teil dieser Mischung wird über Leitung 38 und den Venturi 13 dann dem Reaktor 5 aufgegeben.

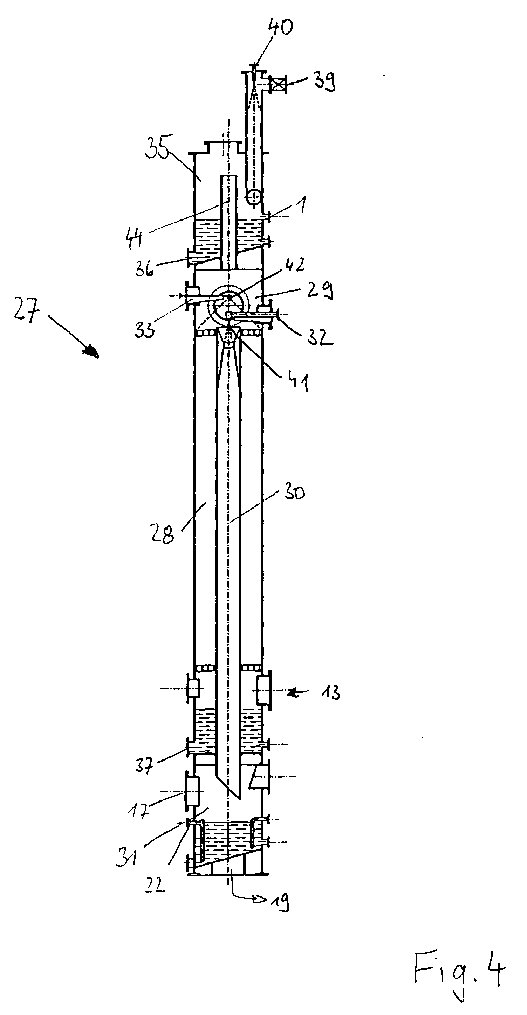

Fig. 4 zeigt eine erfindungsgemäße Kolonne 27 im Detail. Die säurehaltigen Gase gelangen von der hydropyrolytischen Säurezersetzung über den Venturi 13 in den Unterteil der Füllkörperkolonne 28 und werden im Gegenstrom zur, am Kolonnenkopf 29 aufgegebenen, Absorptionsflüssigkeit geführt. Vom Kolonnenkopf 29 werden die Gase dann, ohne die Kolonne 27 zu verlassen, durch ein zentrales Strahlwäscherrohr 30 in der Mitte durch die Füllkörperkolonne 28 zum Spülwasserbehälter 31 unterhalb der Kolonne 27 geführt. Der Spülwasserbehälter 31 dient als Vorlaufgefäß für die Absorptionskolonne 28 und dem Wäscherkreislauf 30. Die Flüssigkeitsaufgabe des Wäschers 30 erfolgt durch eine zentrale Düse 41 mit einem Sprühwinkel von ca. 20° - 30° direkt in das Strahlrohr 30. Die Flüssigkeitsaufgabe auf die Kolonne 28 erfolgt aus einem Teilstrom des Wäscherkreislaufes und wird gleichmäßig mit einer zweiten zentralen Düse 42 mit einem Sprühwinkel von ca. 90° - 120° oder mehreren einzelnen Düsen oder Tropfstellen (ca. 100 Tropfstellen pro m2) gleichmäßig aufgegeben.

Am Kopf des Strahlrohres 30 befindet sich eine Einschnürung 43 um mit erhöhter Gasgeschwindigkeit die Turbulenz und damit den Reinigungseffekt des Gaswäschers zu erhöhen.

Aus dem Oberteil des Spülwasserbehälters 31 saugt der mit Wasser beaufschlagte Abgasventilator 17 die Gase ab und leitet sie zum Abgaskamin (26) . Die im Unterteil des, als Drallabscheider ausgeführten Kamins, gesammelten Spülwässer des Abgasventilators werden in den Spülwasserbehälter 31 zurück geführt und als Waschflüssigkeit für den Gaswäscher 30 bzw. als Absorptionsflüssigkeit auf die Kolonne 27 aufgegeben.

Am Kolonnenkopf ist ein Verdampfer 35 integriert. Die in der Regenerationsanlage zu zersetzende frische Metallsalzlösung gelangt über den Zulaufstutzen 1 in den Verdampfer. Vom Stutzen 36 wird die Lösung der Verdampferumwälzpumpe zugeführt, im Wärmetauscher aufgewärmt und mit einer Düse 40 in den Frischluftansaugstrom 39 eingesprüht. Die Luft erwärmt sich dadurch und verdampft einen Flüssigkeitsteil der Metallsalzlösung. Die Brüden werden über ein Verbindungsrohr 44 in den Kolonnenkopf gesaugt und mit den anderen Abgasen der Kolonne 28 durch das Strahlrohr 30 weitergefördert.

## Patentansprüche

1. Absorptionskolonne für die Absorption von Säuredämpfen bzw. gasförmigen sauren Verbindungen, dadurch gekennzeichnet, daß in die Absorptionskolonne (27) eine Waschkolonne (30) integriert ist.

2. Absorptionskolonne nach Anspruch 1, dadurch gekennzeichnet, daß Absorptions(28)- und Waschteil (30) ineinander angeordnet sind.

3. Absorptionskolonne nach Anspruch 2, dadurch gekennzeichnet, daß die Teile (28, 30) konzentrisch ineinander angeordnet sind.

4. Absorptionskolonne nach Anspruch 2 oder 3, dadurch gekennzeichnet, daß der äußere Teil als Absorptionsteil (28) und der innere Teil als Waschteil (30) ausgebildet ist.

5. Absorptionskolonne nach einem der Ansprüche 1 bis 4, dadurch gekennzeichnet, daß der Vorlagetank (31) für die Umwälzung in der Waschkolonne (30) und für die Aufgabe der Absorptionsflüssigkeit unmittelbar unterhalb der Kolonne (27) angeordnet ist.

6. Absorptionskolonne nach einem der Ansprüche 1 bis 5, dadurch gekennzeichnet, daß die Aufgabeleitung (33) für die Absorptionsflüssigkeit und die Leitung für die Spülwasserumwälzung (32) mit derselben Pumpe (19) verbunden sind.

7. Absorptionskolonne nach einem der Ansprüche 1 bis 6, dadurch gekennzeichnet, daß unmittelbar oberhalb der Kolonne (27) ein Verdampfer (35) angeordnet ist.

8. Absorptionskolonne nach einem der Ansprüche 1 bis 7, dadurch gekennzeichnet, daß die Brüden vom Verdampfer (37) durch ein Verbindungsrohr (44) am Kolonnenkopf mit den Kolonnenabgasen vereinigt werden.
